# FASCICULE DE BREVET EUROPEEN

(11) **EP 1 910 712 B1**
(45) Date de publication et mention de la délivrance du brevet: **24.02.2010**
(21) Numéro de dépôt: 06778934.7
(22) Date de dépôt: 14.06.2006
(51) Int. Cl.: F16H 57/04, F16N 21/00

(54) **DISPOSITIF DE LUBRIFICATION POUR BOITE DE VITESSES**
SCHMIERVORRICHTUNG FÜR EIN GETRIEBE
GEARBOX LUBRICATING DEVICE

(30) Priorité: 21.07.2005 FR 0552266
(43) Date de publication de la demande: 16.04.2008
(73) Titulaire: RENAULT S.A.S., 92100 Boulogne Billancourt (FR)
(72) Inventeur: RAOUL, Michel, F-78990 Elancourt (FR); RODRIGUES, Philippe, F-78570 Andresy (FR)
(86) Numéro de dépôt international: PCT/FR2006/050556
(87) Numéro de publication internationale: WO 2007/010152

(56) Documents cités:
- EP-A- 0 362 043
- EP-A- 0 448 457
- DE-C- 83 368
- US-A- 5 054 334

## Description

La présente invention concerne la lubrification des boîtes de vitesses à arbres parallèles et à engrenages, à commande manuelle ou robotisée. La Publication EP 0 448 457 A décrit un dispositif de lubrication selon le préambule de la revendication indépendante 1.

Plus précisément, elle a pour objet un dispositif de lubrification comprenant un conduit axial raccordé à au moins un perçage radial de lubrification débouchant dans la zone de palier d'un pignon libre en rotation autour de cet arbre, et un tube de lubrification fixe s'étendant à l'intérieur du conduit.

Dans les boîtes de vitesses manuelles ou robotisées, la lubrification des paliers de pignons fous est une fonction primordiale pour leur bon rendement énergétique et leur pérennité.

Habituellement, la lubrification des paliers de pignons fous est assurée par un système de conduits d'huile comprenant un conduit axial percé à l'intérieur de l'arbre port ant les pignons fous, et des perçages radiaux, sous chaque port ée de pignon. Le conduit axial est généralement alimenté par une canule logée dans le carter ou dans un couvercle de la boîte. L'huile s'écoule dans le conduit central et elle est centrifugée sur les parois de celui-ci, par la rotation de l'arbre. La plus grande partie de l'huile s'écoule ainsi par le premier perçage radial rencontré sur son trajet le long du conduit, de sorte que le premier palier de pignon fou est toujours mieux lubrifié que les suivants.

Pour améliorer la lubrification des paliers des pignons, il a déjà proposé de placer à l'intérieur de l'arbre de boîte, un tube avec des trous de lubrification facilitant l'accès de l'huile vers les zones de palier des pignons, en passant par des perçages radiaux de l'arbre. Toutefois, pour des raisons de guidage, les tubes de lubrification utilisés présentent généralement un jeu étroit vis-à-vis du conduit axial de l'arbre, et le défilement rapide des trous de lubrification devant les perçages radiaux de l'arbre, n'autorise pas un débit d'huile suffisant en direction des paliers.

La présente invention vise à remédier à ces inconvénients des dispositifs de lubrification connus, de manière à assurer une bonne lubrification des tous les paliers de pignon fou d'une boîte de vitesses.

Dans ce but, elle propose que le tube présente des trous de lubrification faisant face aux perçages de l'arbre avec un écart suffisant pour que l'huile accumulée entre le tube et l'arbre soit aspirée en continu en direction des zones de palier des pignons et des groupes de synchronisation.

De préférence, le tube de lubrification s'étend sur toute la longueur de l'arbre.

Selon un premier mode de réalisation, l'écart entre le tube de lubrification et le conduit axial de l'arbre est constant sur toute la longueur du tube, sauf à ses extrémités.

Selon un deuxième mode de réalisation, le tube présente des premiers secteurs fonctionnels faisant face aux perçages radiaux, où il est écarté du conduit, alternés avec des deuxièmes secteurs fonctionnels, où il est plus proche du conduit.

D'autres caractéristiques et avant ages de la présente invention apparaîtront clairement à la lecture de la description suivante d'un mode de réalisation non limitatif de celle-ci, en se reportant aux dessins annexés, sur lesquels :
- les figures 1 et 2 illustrent un premier mode de réalisation préférentiel, et
- la figure 3 illustre un deuxième mode de réalisation préférentiel.

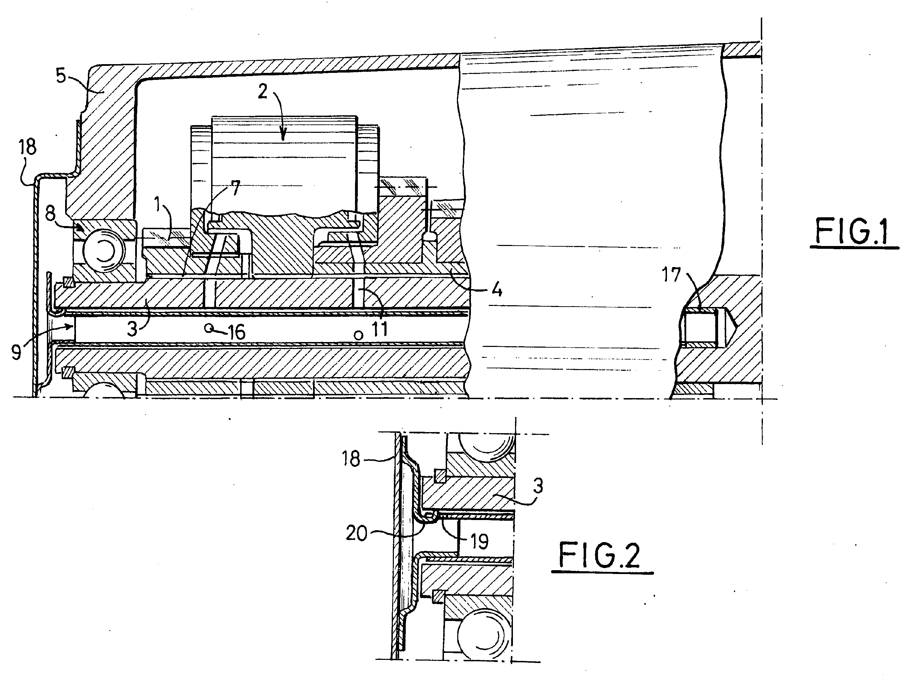

Sur la figure 1, et sur l'agrandissement de la figure 2, on a représenté en coupe les pignons fous 1 et les groupes de synchronisation 2 correspondants, d'une ligne primaire ou secondaire de boîte de vitesses à arbres parallèles et à engrenages. Les pignons 1 sont montés sur l'arbre 3, autour de bagues 4. Ils présentent des gorges de lubrification 6, conduisant l'huile en direction des groupes de synchronisation 2. Les zones d'appui 7 (mieux localisées sur la figure 2), ou zones de palier, des pignons 1 sur leurs bagues de guidage 4, retiennent aussi un film d'huile const it uant un palier hydrodynamique de guidage. Les pignons 1 sont entraînés en rotation par des pignons fixes (non représentés). Ils sont susceptibles d'être couplés à l'arbre 3, après synchronisation, pour engager les différentes vitesses de la boîte.

L'arbre 3 est supporté par le carter 5 de la boîte dans des roulements d'extrémité 8, dont un seul apparaît sur les figures. L'arbre 3 présente un conduit axial 9 et des perçages radiaux 11, s'étendant vers l'extérieur à partir du conduit 9, en direction des paliers 7. A l'intérieur du conduit 9, s'étend un tube de lubrification 12, soutenu à une extrémité dans une canule de lubrification 13, fixée sur le couvercle 18, et à l'autre extrémité par l'arbre 3, sur une zone d'appui 17. Le tube 12 comporte une rainure 19 qui coopère avec un ergot 20 de la canule 13, de sorte qu'il est immobilisé en rotation, et que les perçages radiaux 11 de l'arbre 3 défilent autour de celui-ci en rotation. Ainsi, l'huile s'écoule à l'intérieur du tube 12, sur toute la longueur de celui-ci, sans être centrifugée. Les trous 16 du tube 12 sont disposés en vis-à-vis des paliers de pignons à lubrifier. Les trous 16 peuvent avoir des diamètres différents et être placés à des hauteurs différentes. Leur dimensionnement et leur disposition visent à obtenir la répartition d'huile souhait ée entre les paliers de pignons.

Le tube 12 s'étend sur toute la longueur de l'arbre 3. Les trous de lubrification 16 faisant face aux perçages 11 de l'arbre 3 présentent un écart diamétral suffisant avec l'arbre 3 pour que l'huile s'accumulant entre le tube 12 et l'arbre 3, soit aspirée en continu en direction des zones de palier 7 et des groupes de synchronisation 2. L'écart entre le tube de lubrification 12 et l'arbre 3, permet d'augmenter globalement le débit de lubrification de tous les paliers, tout en limitant le cisaillement de l'huile entre le tube et l'arbre.

Sur la figure 1, cet écart est constant sur toute la longueur du tube 12, sauf à ses extrémités. Cette disposition impose une zone d'appui et de guidage 17 du tube 12 à l'intérieur de l'arbre 3, à l'opposé de la canule 13.

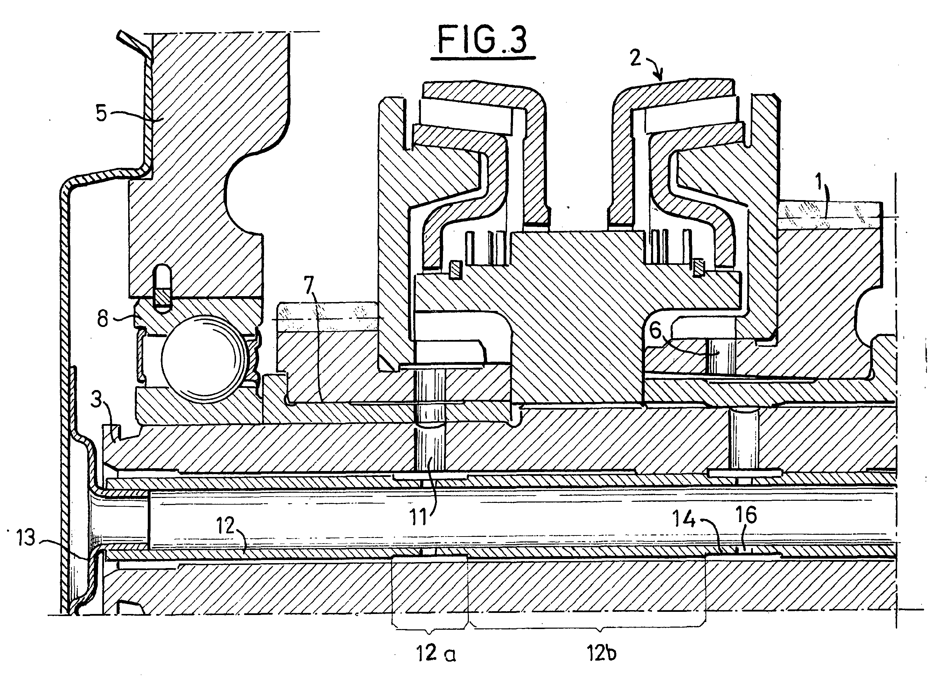

La figure 3 présente un deuxième mode de réalisat ion, selon lequel le tube 12 présente sur sa surface extérieure une alternance de secteurs fonctionnels distincts 12a et 12b. Les secteurs fonctionnels 12a sont définis par des gorges 14 découpées dans le tube 12, de part et d'autre des trous de lubrification 16, et faisant face aux perçages radiaux 11. L'écartement de la surface du tube 12 avec celle du conduit 9 constitue un volume local d'huile autour duquel tournent les perçages radiaux 11. Les secteurs fonctionnels 12b sont caractérisés par un écartement réduit entre les surfaces du tube 12 et du conduit 9.

Cette disposition facilite l'amorçage de la lubrification, et augmente le débit d'aspiration d'huile par rapport au premier mode de réalisation décrit, le tube de lubrification 12 étant fixé et bloqué en rotation sur la canule 13, comme sur la figure 1. Autour de chaque trou de lubrification 16, les secteurs fonct ionnels 12a, présentent du fait de leur écartement une faible résistance à l'écoulement et à la circulation de l'huile, ce qui facilite son aspiration dans les perçages radiaux 11, notamment lors de l'amorçage de la lubrification. Le débit d'huile en direct ion des paliers est donc supérieur à celui de la figure 1. Par ailleurs, le cisaillement de l'huile dans les secteurs fonctionnels 12a étant moindre, la traînée et l'échauffement s'en trouvent réduits.

En revanche, entre les gorges 14, l'écartement entre le tube et le conduit étant faible, le cisaillement de l'huile reste significatif, si bien que celle-ci reste confinée axialement dans les secteurs fonctionnels 12b. Ces der nier s forment ainsi des paliers hydrodynamiques, qui assurent le guidage du tube, à l'intérieur de l'arbre. Dans ces conditions, la zone d'appui et de guidage 17 de la figure 1 n'est plus nécessaire. Ainsi, le tube 12 est soutenu d'une part par la canule 13 à une extrémité, seul point d'appui fixe sur la boîte de vitesses, et d'autre part, à l'écart de la canule, par les zones 12b qui agissent en paliers hydrodynamiques.

L'huile parvenant dans les secteurs fonct ionnels 12a du tube suit le chemin présentant le moins de perte de charge à partir de celles-ci, à savoir les perçages radiaux 11 de l'arbre. Par rapport au premier mode de réalisation décrit, on a ainsi constaté une forte augmentation du débit et un amorçage automatique de la lubrification.

En conclusion, la définition géométrique du dispositif est toujours imposée par les dimensions de l'arbre, et par la position de ses perçages radiaux. Les paramètres, tels que les dimensions du tube, le diamètre et la position des trous de lubrification du tube, la largeur et la profondeur des gorges peuvent être définis par mise au point.

## Revendications

1. Dispositif de lubrification de pignons (1) tournant fou autour d'un arbre (3) de boîte de vitesses comprenant un conduit axial (9) de cet arbre raccordé à au moins un perçage radial de lubrification (11) débouchant en direction de la zone de palier (7) et du groupe de synchronisation (2) d'un pignon fou, et un tube de lubrification fixe (12) s'étendant à l'intérieur du conduit (9), **caractérisé en ce que** le tube (12) présente des trous de lubrification (16) faisant face aux perçages (11) de l'arbre avec un écart suffisant pour que l'huile accumulée entre le tube (12) et l'arbre (3) soit aspirée en continu en direction des zones de palier (7) et des groupes de synchronisation (2) des pignons (1).

2. dispositif de lubrification selon la revendication 1, **caractérisé en ce que** le tube de lubrification (12) s'étend sur toute la longueur de l'arbre (3).

3. Dispositif de lubrification selon la revendication 1 ou 2, **caractérisé en ce que** l'écart entre le tube de lubrification et le conduit axial de l'arbre est constant sur toute la longueur du tube (12), sauf à ses extrémités.

4. Dispositif de lubrification selon la revendication 1 ou 2, **caractérisé en ce que** le tube (12) présente des premiers secteurs fonctionnels (12a) faisant face aux perçages radiaux (11) où il est écarté du conduit (9), alternés avec des deuxièmes secteurs fonctionnels (12b) où il est plus proche de celui-ci.

5. Dispositif de lubrification selon la revendication 4, **caractérisé en ce que** les premiers secteurs fonctionnels (12a) du tube sont définis par des gorges (14) découpées de part et d'autre des trous de lubrification (16).

6. Dispositif de lubrification selon la revendication 3, 4 ou 5, **caractérisé en ce que** les deuxièmes secteurs fonctionnels (12b) assurent le guidage du tube (12) à l'int érieur du conduit (9).

7. Dispositif de lubrification selon l'une des revendications 3 à 6 **caractérisé en ce que** le tube (12) ne présente qu'un seul point d'appui fixe sur la boîte de vitesses.

8. Disposit if de lubrification selon l'une des revendications précédentes **caractérisé en ce que** le tube (12) est fixé sur une canule (13) collectant l'huile de lubrification de la boîte, qui constitue son seul point d'appui fixe sur la boîte.

9. Dispositif de lubrification selon l'une des revendications précédentes, **caractérisé en ce que** le tube (12) est immobilisé en rotation dans le conduit (9).

10. Dispositif de lubrification selon la revendication 9, **caractérisé en ce que** le tube (12) présente une rainure (19) immobilisée sur un ergot (20) de la canule (13).

## Claims

1. Device for lubricating pinions (1) rotating freely about a shaft (3) of a gearbox comprising an axial duct (9) of this shaft connected to at least one radial lubrication drill hole (11) opening towards the bearing zone (7) and of the synchronization unit (2) of an idler pinion, and a fixed lubrication tube (12) extending inside the duct (9), **characterized in that** the tube (12) has lubrication holes (16) facing the drill holes (11) of the shaft with a sufficient space for the oil accumulated between the tube (12) and the shaft (3) to be continuously sucked towards the bearing zones (7) and the synchronization units (2) of the pinions (1).

2. Lubrication device according to Claim 1, **characterized in that** the lubrication tube (12) extends over the whole length of the shaft (3).

3. Lubrication device according to Claim 1 or 2, **characterized in that** the space between the lubrication tube and the axial duct of the shaft is constant over the whole length of the tube (12), except at its ends.

4. Lubrication device according to Claim 1 or 2, **characterized in that** the tube (12) has first functional sectors (12a) facing the radial drill holes (11) where it is spaced from the duct (9), alternating with second functional sectors (12b) where it is closer to the latter.

5. Lubrication device according to Claim 4, **characterized in that** the first functional sectors (12a) of the tube are defined by grooves (14) cut out on either side of the lubrication holes (16).

6. Lubrication device according to Claim 3, 4 or 5, **characterized in that** the second functional sectors (12b) guide the tube (12) inside the duct (9).

7. Lubrication device according to one of Claims 3 to 6, **characterized in that** the tube (12) has only one fixed bearing point on the gearbox.

8. Lubrication device according to one of the preceding claims, **characterized in that** the tube (12) is fixed to a cannula (13) collecting the lubrication oil of the gearbox, which forms its only fixed bearing point on the gearbox.

9. Lubrication device according to one of the preceding claims, **characterized in that** the tube (12) is prevented from rotating in the duct (9).

10. Lubrication device according to Claim 9, **characterized in that** the tube (12) has a flute (19) immobilized on a lug (20) of the cannula (13).

## Patentansprüche

1. Schmiervorrichtung für frei laufend um eine Welle (3) eines Schaltgetriebes drehende Ritzel (1), die einen axialen Kanal (9) dieser Welle, der mit mindestens einer radialen Schmierbohrung (11) verbunden ist, die in Richtung der Lagerzone (7) und des Synchronisationssatzes (2) eines Freilaufritzels mündet, und ein festes Schmierrohr (12) enthält, das sich im Inneren des Kanals (9) erstreckt, **dadurch gekennzeichnet, dass** das Rohr (12) Schmierlöcher (16) gegenüber den Bohrungen (11) der Welle mit einem ausreichenden Abstand aufweist, damit das zwischen dem Rohr (12) und der Welle (3) angesammelte Öl durchgehend in Richtung der Lagerzonen (7) und der Synchronisationssätze (2) der Ritzel (1) angesaugt wird.

2. Schmiervorrichtung nach Anspruch 1, **dadurch gekennzeichnet, dass** das Schmierrohr (12) sich über die ganze Länge der Welle (3) erstreckt.

3. Schmiervorrichtung nach Anspruch 1 oder 2, **dadurch gekennzeichnet, dass** der Abstand zwischen dem Schmierrohr und dem axialen Kanal der Welle über die ganze Länge des Rohrs (12) außer an seinen Enden konstant ist.

4. Schmiervorrichtung nach Anspruch 1 oder 2, **dadurch gekennzeichnet, dass** das Rohr (12) erste Funktionsbereiche (12a) aufweist, die den radialen Bohrungen (11) gegenüber liegen, wo es vom Kanal (9) beabstandet ist, abwechselnd mit zweiten Funktionsbereichen (12b), in denen es diesem näher liegt.

5. Schmiervorrichtung nach Anspruch 4, **dadurch gekennzeichnet, dass** die ersten Funktionsbereiche (12a) des Rohrs von Hohlkehlen (14) definiert werden, die zu beiden Seiten der Schmierlöcher (16) ausgeschnitten sind.

6. Schmiervorrichtung nach Anspruch 3, 4 oder 5, **dadurch gekennzeichnet, dass** die zweiten Funktionsbereiche (12b) die Führung des Rohrs (12) innerhalb des Kanals (9) gewährleisten.

7. Schmiervorrichtung nach einem der Ansprüche 3 bis 6, **dadurch gekennzeichnet, dass** das Rohr (12) nur einen einzigen festen Auflagepunkt auf dem Schaltgetriebe hat.

8. Schmiervorrichtung nach einem der vorhergehenden Ansprüche, **dadurch gekennzeichnet, dass** das Rohr (12) an einer das Schmieröl des Getriebes sammelnden Kanüle (13) befestigt ist, die seinen einzigen festen Auflagepunkt auf dem Getriebe bildet.

9. Schmiervorrichtung nach einem der vorhergehenden Ansprüche, **dadurch gekennzeichnet, dass** das Rohr (12) im Kanal (9) in Drehung blockiert ist.

10. Schmiervorrichtung nach Anspruch 9, **dadurch gekennzeichnet, dass** das Rohr (12) eine Rille (19) hat, die an einem Zapfen (20) der Kanüle (13) blockiert ist.
